# EUROPÄISCHE PATENTSCHRIFT

(11) **EP 1 141 623 B1**
(45) Veröffentlichungstag und Bekanntmachung des Hinweises auf die Patenterteilung: **27.09.2006**
(21) Anmeldenummer: 99966896.5
(22) Anmeldetag: 29.12.1999
(51) Int. Cl.: F21V 8/00

(54) **LICHTQUELLENELEMENT MIT SEITLICHER SCHRÄGER LICHTEINKOPPLUNG**
LIGHT SOURCE ELEMENT WITH LATERAL, ANGULAR LIGHT INJECTION
SOURCE LUMINEUSE A COUPLAGE LATERAL OBLIQUE DE LUMIERE

(30) Priorität: 29.12.1998 DE 19860696; 29.12.1998 DE 19860697; 29.12.1998 DE 19860695
(43) Veröffentlichungstag der Anmeldung: 10.10.2001
(73) Patentinhaber: Osram Opto Semiconductors GmbH & Co. OHG, 93049 Regensburg (DE)
(72) Erfinder: BACHL, Bernhard, D-93055 Regensburg (DE); SCHELLHORN, Franz, D-93049 Regensburg (DE); KIRCHBERGER, Günter, D-93161 Sinzing (DE); WAITL, Günter, D-93049 Regensburg (DE); BRUNNER, Herbert, D-93047 Regensburg (DE)
(74) Vertreter: Epping - Hermann - Fischer
(86) Internationale Anmeldenummer: PCT/DE1999/004125
(87) Internationale Veröffentlichungsnummer: WO 2000/039501

(56) Entgegenhaltungen:
- EP-A- 0 500 960
- US-A- 5 039 207
- US-A- 5 339 179
- PATENT ABSTRACTS OF JAPAN vol. 1997, no. 01, 31. Januar 1997 (1997-01-31) & JP 08 248420 A (CASIO COMPUT CO LTD), 27. September 1996 (1996-09-27) -& JP 08 248420 A

## Beschreibung

Die Erfindung bezieht sich auf ein Lichtquellenelement gemäß dem Oberbegriff des Patentanspruchs 1 zur Hinterleuchtung von Flüssigkristall-Displays und zur ambienten Beleuchtung oder Umgebungsbeleuchtung.

Bei der Hinterleuchtung von Flüssigkristall-Displays besteht eine wichtige Aufgabe darin, die Flüssigkristall-Anzeigefläche mit einer möglichst homogenen monochromen oder polychromen Lichtstrahlung ausreichend hoher Leuchtdichte auszuleuchten. Dazu muß die aus einer oder mehreren Lichtquellen emittierte Lichtstrahlung einerseits möglichst homogen auf die Anzeigefläche verteilt werden, wobei andererseits die Verluste möglichst minimiert werden sollten.

In der EP-A-0 500 960 ist ein flächiges Lichtquellenelement beschrieben, welches zur Hinterleuchtung bei einem Flüssigkristall-Display eingesetzt werden soll. Bei diesem Lichtquellenelement ist an einer Stirnseitenfläche als einer Lichteinfallsfläche eines transparenten Lichtwellenleiters eine Lichtquelle angeordnet. Eine zu der Lichteinfallsfläche senkrechte Oberfläche des Lichtwellenleiters dient als eine Lichtaustrittsfläche und auf der dieser Lichtaustrittsfläche gegenüberliegenden Oberfläche des Lichtwellenleiters ist eine lichtreflektierende Schicht angeordnet. Ferner ist ein Streuglied derart angeordnet, daß das aus der Lichtaustrittsfläche austretende Licht diffus gestreut wird. Die Homogenisierung der Lichtstrahlung über die Fläche des Lichtquellenelements wird nun dadurch erreicht, daß eine oder beide Oberflächen des Lichtwellenleiters aufgerauhte Abschnitte und ebene Abschnitte aufweist und das Flächenverhältnis der aufgerauhten zu den ebenen Abschnitten entlang dem Wellenleiter kontinuierlich verändert wird. Die ebenen Abschnitte haben die Eigenschaft, daß Lichtstrahlen von ihnen aufgrund von Totalreflexion in den Wellenleiter zurückreflektiert werden, während an den aufgerauhten Abschnitten die Lichtstrahlen gestreut werden. Da an der Lichteintrittsseite des Lichtwellenleiters die Leuchtdichte zunächst relativ hoch ist, wird dort ein relativ hoher Anteil an ebenen Flächen eingestellt, so daß sich die Lichtwellen in diesem Bereich mit einer relativ hohen Wahrscheinlichkeit durch mehrfache Totalreflexion in dem Wellenleiter fortbewegen werden. Dieser Flächenanteil an ebenen Abschnitten wird im Verlauf des Wellenleiters kontinuierlich zurückgeführt, so daß die Lichtstrahlung mehr und mehr an dem zunehmenden Anteil an aufgerauhten Flächen gestreut werden kann. Dadurch gelingt es, eine relativ gleichmäßige Ausgangsstrahlung an der Lichtaustrittsfläche des Lichtquellenelements zu erzeugen.

Bei der beschriebenen Anordnung muß die Lichtstrahlung an einer Stirnseite des Lichtquellenelements in den Lichtwellenleiter eingekoppelt werden. Bei Verwendung einer längs dieser Seite angeordneten Leuchtstoffröhre, die von einem metallischen Reflektor umgeben ist, läßt sich voraussichtlich in vielen Fällen eine ausreichende Leuchtdichte für die Hinterleuchtung eines Flüssigkristall-Display bereitstellen. Dennoch ist diese Anordnung relativ unflexibel, da aufgrund der Beschränkung hinsichtlich der verwendbaren Lichtquelle die Leuchtdichte nicht über ein bestimmtes Maß hinaus gesteigert werden kann. Außerdem ist die Anbringung der Lichtquelle an die seitliche Stirnfläche des Lichtquellenelements auch aus Platzgründen ungünstig, weil der hierfür benötigte Platz letztlich die Breite der Anzeigefläche des Flüssigkristall-Displays beschränkt.

Die beschriebene Anordnung ist beispielsweise für die Hinterleuchtung eines Flüssigkristall-Display im Armaturenbrett eines Kraftfahrzeugs geeignet. Wenn sich das Display relativ weit oben an dem Armaturenbrett befindet, ist die Anzeigefläche gut sichtbar. Wenn diese jedoch relativ weit unten an dem Armaturenbrett angeordnet ist, sieht der Fahrer oder Beifahrer mit einem relativ großen Betrachtungswinkel auf die Anzeigefläche. Insbesondere bei Flüssigkristall-Displays mit ihrer großen Betrachtungswinkelabhängigkeit führt dies zu einer mangelhaften Erkennung der Anzeigefläche.

Bei der beschriebenen Anordnung wird als lichtreflektierede Schicht nach der Herstellung des Lichtwellenleiters eine Folie oder ein Film mit einer aufgedampften metallischen Schicht auf die der Lichtaustrittsfläche gegenüberliegende Oberfläche des Lichtwellenleiters aufgebracht. Diese Vorgehensweise der Aufbringung der Folie erweist sich jedoch als relativ umständlich, da die Folie in der Regel auf die Oberfläche des Lichtwellenleiters aufgeklebt werden muß. Zu diesem Zweck muß ein Kleber verwendet werden, der nach Möglichkeit für einen weiten Wellenlängenbereich des sichtbaren Spektralbereichs ausreichende Transparenz aufweisen sollte, da das Lichtquellenelement nicht nur für die Hinterleuchtung von Flüssigkristall-Displays mit Weißlichtquellen sondern auch zur monochromen Hinterleuchtung mit LEDs beliebiger Wellenlänge verwendbar sein sollte.

Die in der EP-A-0 500 960 beschriebene Anordnung ist deshalb nur bei Vorliegen bestimmter Voraussetzungen für eine gute Beleuchtungssituation geeignet.

In der US 5,039,207 ist ein weiteres Flüssigkristall-Display mit einer Vorrichtung zur Hinterleuchtung beschrieben. Zur Hinterleuchtung dient eine transparente Schicht mit einer prismatisch geformten Stirnseite, an der mehrere Lichtquellen angeordnet sind. Die gegenüberliegende Stirnseite und die der Lichtaustrittsfläche gegenüberliegende Fläche der transparenten Schicht sind mit einer reflektierenden Schicht bedeckt.

Der vorliegenden Erfindung liegt die Aufgabe zugrunde, ein Lichtquellenelement, insbesondere zur Hinterleuchtung von Flüssigkristall-Displays, zu schaffen, mit welchem auch bei unterschiedlichen Umgebungsbedingungen eine verbesserte Leuchtdichte ermöglicht werden kann.

Weiterhin ist es auch bei den im Stand der Technik bekannten Lichtquellenelementen, die die Funktion der ambienten Beleuchtung oder Umgebungsbeleuchtung haben, aufgrund der Art der Einkopplung der Lichtstrahlung an den Stirnseiten des Lichtwellenleiters ein Problem, die Leuchtdichte zu steigern. Somit ist es eine weitere Aufgabe der vorliegenden Erfindung, ein Lichtquellenelement zur Umgebungsbeleuchtung zu schaffen, welches eine höhere Leuchtdichte und/oder eine größere Lichtaustrittsfläche aufweist.

Es ist weitere Aufgabe der Erfindung, ein Verfahren zur Herstellung eines Lichtquellenelements anzugeben, welches eine hohe Leuchtdichte des Lichtquellenelements ermöglicht.

Die oben geschilderten Probleme des Standes der Technik werden mit einem Lichtquellenelement gemäß Patentanspruch 1 und mit einem Verfahren gemäß Patentansprüchen 20 oder 22 gelöst.

Bei dem Lichtquellenelement ist bevorzugt vorgesehen, daß die Lichtstrahlung nicht mehr wie beim Stand der Technik an einer oder beiden Stirnflächen in den Lichtwellenleiter eingekoppelt wird, sondern an Oberflächen, die in Längsrichtung des Lichtquellenelements verlaufen, wobei die Lichtstrahlung mit einem schiefen Winkel in den Lichtwellenleiter eingekoppelt wird. Da entlang dieser Oberflächen mehr Platz für die Positionierung der Lichtquellen vorhanden ist, kann eine Mehrzahl von Lichtquellen vorgesehen werden. Dadurch wird die Möglichkeit geschaffen, daß die Leuchtdichte eines erfindungsgemäßen Lichtquellenelements gesteigert werden kann.

Der Lichtwellenleiter ist zumindest an der der Lichtaustrittsfläche gegenüberliegenden Oberfläche und an den die Lichtaustrittsfläche und die gegenüberliegende Oberfläche verbindenden Längsseitenflächen mit einem Reflektor bedeckt, in den gegebenenfalls Öffnungsbereiche zur Anordnung von Lichteinkopplungseinheiten geformt sind.

Bei einem ersten Beispiel eines erfindungsgemäßen Lichtquellenelements werden die Lichtquellen an den Längsseitenflächen des Lichtwellenleiters angeordnet. An den Längsseitenflächen kann eine Mehrzahl von Lichtquellen wie Lichtemissionsdioden oder dergleichen angeordnet werden und damit die Leuchtdichte des Lichtquellenelements gesteigert werden.

Derartige Lichtquellenelemente können z.B. flächig ausgebildet werden und somit in idealer Weise zur Hinterleuchtung von Flüssigkristall-Displays eingesetzt werden.

Weiterhin können derartige Lichtquellenelemente zur ambienten Beleuchtung oder Umgebungsbeleuchtung verwendet werden. Durch die Möglichkeit der Vielfacheinleuchtung wird die Dämpfung des Lichtwellenleiters praktisch ausgeschaltet, so daß Lichtwellenleiter beliebiger Länge ausgeleuchtet und für die Beleuchtung der Umgebung verwendet werden können.

Bei einer weiteren Ausgestaltung weist das erfindungsgemäße Lichtquellenelement einen Lichtwellenleiter mit einer Lichtaustrittsfläche auf, wobei die der Lichtaustrittsfläche gegenüberliegende Oberfläche des Lichtwellenleiters mit einem Licht reflektierenden oder diffus zurückwerfenden Reflektor bedeckt ist, und wobei ferner die Lichtaustrittsfläche und die ihr gegenüberliegende Oberfläche des Lichtwellenleiters einen von Null verschiedenen Winkel bilden.

Mit einem derartigen Lichtquellenelement kann ein Lichtleitermodul hergestellt und im Armaturenbrett eines Kraftfahrzeugs montiert werden. Je nach der für das einzubauende Lichtleitermodul vorgesehenen Höhenposition wird bei der Herstellung der Schrägstellungswinkel der Lichtaustrittsfläche derart eingestellt, daß Fahrer oder Beifahrer direkt auf die Anzeigefläche des Flüssigkristall-Display blicken.

Das erfindungsgemäße Verfahren zur Lösung der Aufgabe zeichnet sich in einer ersten Ausführungsform dadurch aus, daß die Aufbringung der reflektierenden Folie praktisch mit der Herstellung des Lichtwellenleiters kombiniert wird. Der Lichtwellenleiter wird nämlich durch Spritzgußtechnik hergestellt, indem ein transparenter Kunststoff in eine Form oder einen Hohlraum einer Spritzgußapparatur eingespritzt wird. Diese Form wird vorher an der Bodenfläche und mindestens einem Teil der Seitenflächen mit der Folie ausgelegt. Beim Aushärten nach dem Spritzgießen des Kunststoffs haftet die Folie an dem Lichtwellenleiter an.

In einer zweiten Ausführungsform des erfindungsgemäßen Verfahrens wird die Folie durch ein Tiefziehverfahren hergestellt und anschließend an dem Lichtwellenleiter angebracht. Vorzugsweise wird dabei eine eine Bodenfläche und mindestens eine Seitenfläche aufweisende Folie in einstückiger Form hergestellt und der Lichtwellenleiter anschließend darin eingesetzt. Die einstückige Folie kann beispielsweise in der Form eines wannenförmigen Kanals hergestellt werden, in den der Lichtwellenleiter eingeschoben werden kann.

Die Erfindung wird im folgenden anhand von Ausführungsbeispielen in den Zeichnungen näher beschrieben. In den Zeichnungen zeigen:
Fig.1 ein erstes Ausführungsbeispiel eines erfindungsgemäßen flächigen Lichtquellenelements für die Hinterleuchtung von Flüssigkristall-Displays;
Fig.2 einen Querschnitt durch das Lichtquellenelement der Fig.1 entlang der Linie II-II.
Fig.3 ein erstes Ausführungsbeispiel eines erfindungsgemäß hergestellten Lichtquellenelement für die Umgebungsbeleuchtung;
Fig.4 ein zweites Ausführungsbeispiel eines erfindungsgemäßen Lichtquellenelements; Fig.4a einen Querschnitt entlang einer Linie IV-IV in Fig.4;
Fig.5 eine spezielle Form des Ausführungsbeispiels der Fig.4.
Fig.6 ein zweites Ausführungsbeispiel eines erfindungsgemäß hergestellten Lichtquellenelements für die Hinterleuchtung von Flüssigkristall-Displays;
Fig.7 einen Querschnitt durch das Lichtquellenelement der Fig.6 entlang der Linie II-II.
Fig.8 ein weiteres Ausführungsbeispiel eines erfindungsgemäß hergestellten flächigen Lichtquellenelements;
Fig.9 einen Querschnitt durch das Lichtquellenelement der Fig.8 entlang der Linie II-II.
Fig.10 eine Teilansicht einer anderen Ausführungsform eines erfindungsgemäß hergestellten flächigen Lichtquellenelements;

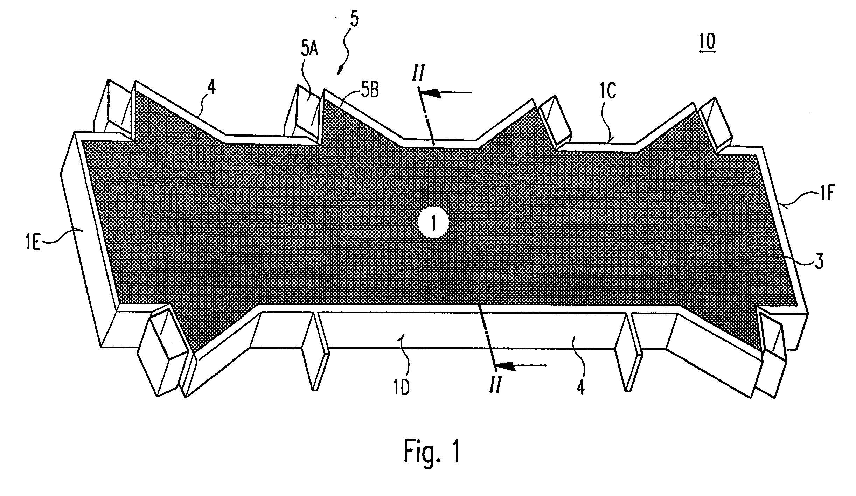

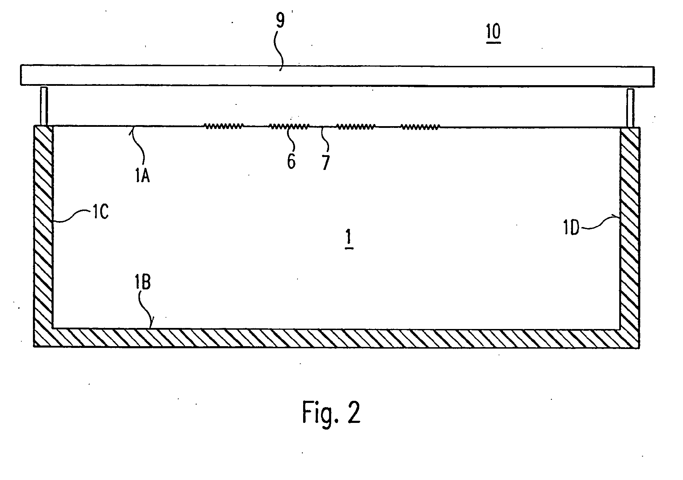

In der Fig.1 ist ein Ausführungsbeispiel eines erfindungsgemäßen Lichtquellenelements 10 dargestellt, wie es beispielsweise zur Hinterleuchtung eines Flüssigkristall-Displays verwendet werden kann. In Fig.2 ist das Lichtquellenelement in einem Querschnitt entlang der Linie II-II in der Fig.1 zusammen mit einem Flüssigkristallelement dargestellt.

Das Kernstück des Lichtquellenelements 10 der Fig.1 ist ein flächiger Lichtwellenleiter 1, der im Prinzip aus jedem transparenten Material, z.B. aus einem thermoplastischen Harz wie Acrylharz, Polycarbonatharz, oder auch aus Plexiglas oder PMMA geformt werden kann. Das in diesen Lichtwellenleiter 1 eingekoppelte Licht wird homogen über die rechteckige Fläche verteilt und einer (nicht dargestellten) Anzeigefläche eines Flüssigkristall-Displays zugeführt. Zu diesem Zweck ist der Lichtwellenleiter 1 allseitig von Reflektoren 4 umgeben, durch welche die auftreffende Lichtstrahlung diffus zurückgeworfen wird.

Die Lichteinkopplung erfolgt über Lichteinkopplungseinheiten 5, die an den Längsseitenflächen 1C und 1D des Lichtquellenelements 10 angebracht sind, und die jeweils aus einem Öffnungsbereich 5B des jeweiligen Reflektors 4 und einer Lichtquelle 5A bestehen. Die Lichtquelle 5A ist beispielsweise eine Halbleiter-Lichtemissionsdiode (LED) für eine monochrome Hinterleuchtung, kann aber auch eine Weißlichtquelle wie eine Halogenleuchte oder dergleichen sein. In einer speziellen Ausführungsform kann eine UV-Strahlungsquelle verwendet werden, wobei dann die Ober- und Unterseiten des Lichtwellenleiters mit einem phosphoreszierenden Material beschichtet werden. Die Lichtquelle 5A ist derart angeordnet, daß die Lichtstrahlung in einem bestimmten schiefen Winkel zu einer Hauptachse des Lichtwellenleiters 1 in diesen eingestrahlt wird. Der Einstrahlwinkel kann dabei beliebig eingestellt werden.

Die Fig.1 zeigt eine Ausführungsform, bei der auf der Längsseitenfläche 1C vier Lichteinkopplungseinheiten und auf der gegenüberliegenden Längsseitenfläche 1D zwei Lichteinkopplungseinheiten an den Lichtwellenleiter 1 angebaut sind.

Das Ausführungsbeispiel der Fig.1 sieht vor, daß bei jeder Lichteinkopplungseinheit ein dreieckförmiger Vorsprung des Lichtwellenleiters 1 vorhanden ist. Eine Seitenfläche dieses Vorsprungs ist mit einem Reflektor 4 bedeckt, während die andere Seitenfläche nach außen freiliegt und somit den Öffnungsbereich 5B bildet.

In dem Ausführungsbeispiel der Fig.1 sind in vorteilhafter Weise auch die Stirnflächen 1E und 1F mit Reflektoren bedeckt, damit kein Licht an den Stirnseiten ausgekoppelt wird.

Die Reflektoren 4 sind vorzugsweise einstückig geformt und durch Spritzguß aus Pocan® (thermisches Polyester auf der Basis von Polybutylenterephtalat) hergestellt. Dieses Material ist weiß und bildet einen idealen diffusen Reflektor. Es ist jedoch auch ebenso denkbar, als Reflektor ein Folienmaterial aufzubringen. Dieses kann z.B. eine Folie auf der Basis von Polycarbonat sein, die mit weißer Farbe beschichtet oder bedruckt ist. Um das Herstellungsverfahren noch weiter zu vereinfachen, könnte die Folie auch bereits während der Spritzgußformung des Lichtwellenleiters 10 aufgebracht werden, indem vor dem Spritzguß die Form der Spritzgußapparatur mit der Folie ausgelegt wird. Nach Aushärtung der Kunststoffmasse haftet die Folie an dem Wellenleiter an und kann zusammen mit diesem aus der Spritzgußapparatur entnommen werden.

Die Homogenisierung der Leuchtdichte wird im Prinzip ebenso wie bei der EP-A-0 500 960 mit einem veränderlichen Flächenverhältnis aus lichtstreuenden und ebenen Flächen herbeigeführt, die auf der Lichtaustrittsfläche 1A und/oder der dieser gegenüberliegenden Oberfläche 1B des Lichtwellenleiters 1 oder auf beiden geformt sind.

In der Figur 2 sind lediglich beispielhaft in die Lichtaustrittsfläche 1A des Lichtwellenleiters 1 geformte lichtstreuende Flächen 6 und ebene Flächen 7 angedeutet. Das Flächenverhältnis der ebenen Flächen 7 zu den lichtstreuenden Flächen 6 hängt von der Leuchtdichte an dem jeweiligen Ort in dem Lichtwellenleiter 1 ab. In Gebieten relativ hoher Leuchtdichte im Lichtwellenleiter 1 wird ein relativ hohes Flächenverhältnis eingestellt, während dieser Anteil in Gebieten relativ niedriger Leuchtdichte niedrig eingestellt wird. Für die Form der lichtstreuenden Flächen 6 gibt es mehrere Möglichkeiten. Eine besonders einfache Herstellungsweise ist das Erzeugen aufgerauhter Bereiche durch Abschmirgeln der jeweiligen Oberfläche. An den Stellen, an denen eine geringe Leuchtdichte vorhanden ist, wird die Fläche vergleichsweise intensiv geschmirgelt, um das auftreffende Licht zur Streuung zu bringen. Die lichtstreuenden Bereiche 6 können aber auch z.B. kleine Erhebungen sein, die in gezielter Weise als Punktmatrix auf die Oberfläche aufgebracht werden. Die Dichteverteilung in der Punktmatrix kann beispielsweise durch ein Simulationsprogramm ermittelt werden, in welches im wesentlichen die Dimensionen des Lichtwellenleiters 1 und die Orte und Intensitäten der Lichteinkopplung sowie die Reflexionsverhältnisse eingegeben werden.

In der Fig.2 ist zusätzlich ein Flüssigkristallelement 9 dargestellt, welches oberhalb der Lichtaustrittsfläche 1A des Lichtwellenleiters 1 angeordnet ist und von dieser mittels Abstandshaltern getrennt.

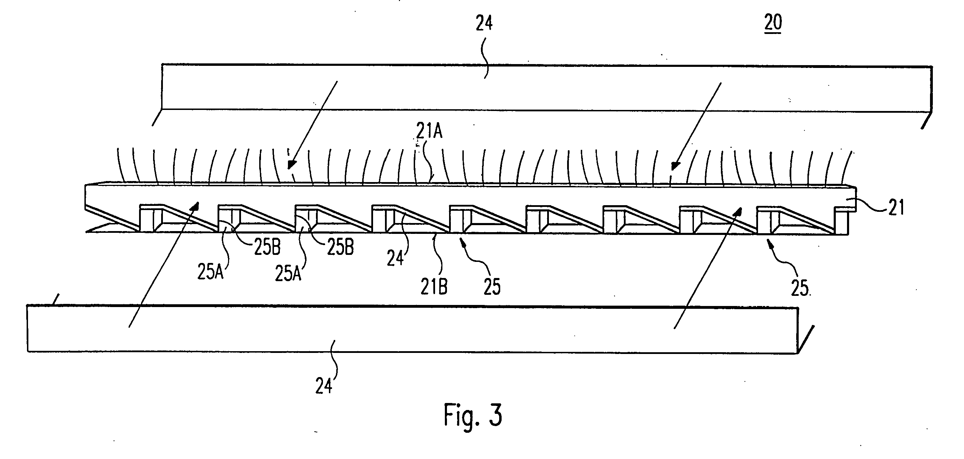

In der Fig.3 ist ein Ausführungsbeispiel eines erfindungsgemäß hergestellten Lichtquellenelements 20 in einer Explosionsdarstellung von der Seite dargestellt, bei dem die Lichteinkopplung nicht über die Längsseitenflächen sondern über die der Lichtaustrittsfläche gegenüberliegende Oberfläche erfolgt.

Wie im ersten Ausführungsbeispiel der Fig. 1 sind die der Lichtaustrittsfläche 21A gegenüberliegende Oberfläche 21B und die Längsseitenflächen eines Lichtwellenleiters 21 mit Reflektoren 24 bedeckt. Diese Reflektoren sind als Folienmaterial aufgebracht entsprechend den Ausführungen für das erste Ausführungsbeispiel. In der der Lichtaustrittsfläche 21A gegenüberliegenden Oberfläche 21B sind Öffnungsbereiche 25B geformt, in die der Lichtwellenleiter 21 mit dreieckförmigen Vorsprüngen eingreift. Vor diesen Öffnungsbereichen 25B sind wiederum Lichtquellen 25A derart angeordnet, daß sie in schiefem Winkel zu einer Haupt- oder Längsachse des Lichtwellenleiters 21 in diesen eingekoppelt wird. Die Öffnungsbereiche 25B in der reflektierenden Schicht 24 und die jeweils zugehörigen Lichtquellen 25A bilden eine Mehrzahl von Lichteinkopplungseinheiten 25. Für die Anordnung dieser Lichteinkopplungseinheiten 25 steht nunmehr die gesamte, der Lichtaustrittsfläche 21A gegenüberliegende Oberfläche 21B zur Verfügung, so daß eine Vielzahl davon vorgesehen werden kann.

Auch bei dieser Ausführungsform können zur Homogenisierung der Lichtstrahlung lichtstreuende und ebene Flächen in einem variablen Verhältnis auf der Lichtaustrittsfläche vorgesehen sein, wie dies im Zusammenhang mit der ersten Ausführungsform beschrieben wurde. Die Lichtquellen können LEDs oder polychrome Weißlichtquellen sein.

Das in Fig.3 gezeigte Ausführungsbeispiel kann beispielsweise als ein langgestrecktes Lichtquellenelement zur ambienten Umgebung verwendet werden. Insbesondere können mehrere der gezeigten Einheiten zur Herstellung einer beliebigen Länge hintereinander angeordnet werden.

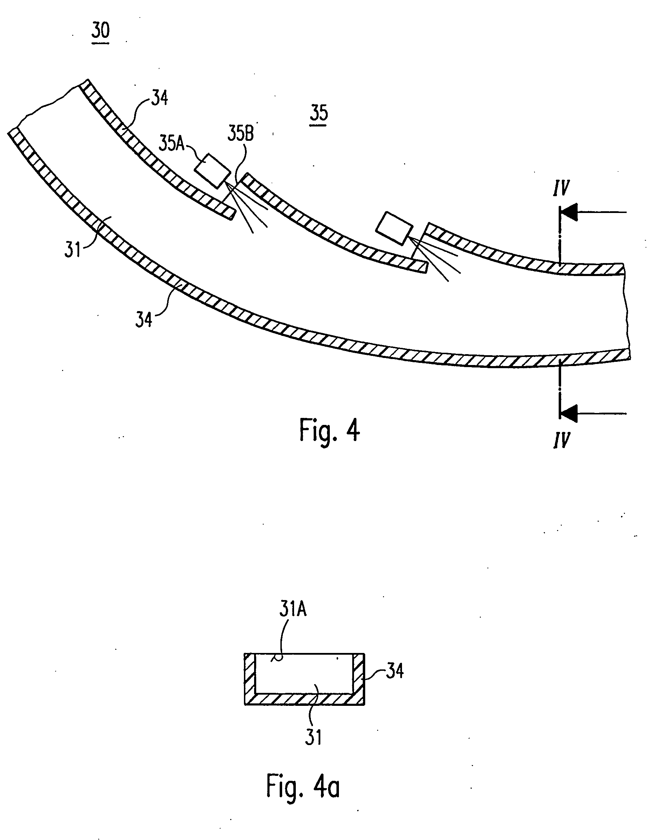

Ein weiteres Ausführungsbeispiel der Erfindung ist in Fig.4 dargestellt, wobei hier das Licht wiederum an den Längsseitenflächen des Lichtquellenelements eingekoppelt wird. Dargestellt ist ein Teil des Lichtquellenelements 30, das im Prinzip in beliebiger Länge geformt werden kann. Das Lichtquellenelement 30 kann beispielsweise zur ambienten Beleuchtung oder Umgebungsbeleuchtung eingesetzt werden.

In Fig.4A ist das Lichtquellenelement 30 im Querschnitt entlang der Linie IV-IV in Fig.4 dargestellt. Der Lichtwellenleiter 31 weist demnach eine Lichtaustrittsfläche 31A auf und ist an der gegenüberliegenden Oberfläche und den Längsseitenflächen mit Reflektoren 34 bedeckt. Für diese gelten dieselben Aussagen wie für die vorgenannten Ausführungsbeispiele. Der Reflektor 34 ist entlang einer Längsseitenfläche in bestimmten Öffnungsbereichen 35B unterbrochen, vor welchen Lichtquellen 35A derart angeordnet sind, daß die von ihnen emittierte Lichtstrahlung in einem schiefen Winkel zur Längsachse des Lichtwellenleiters 30 in diesen eindringt. Die Öffnungsbereiche 35B in dem Reflektor 34 und die davor angebrachten Lichtquellen 35A bilden Lichteinkopplungseinheiten 35. Die Lichtquellen 35 können - wie schon in den vorhergehenden Ausführungsbeispielen - aus LEDs oder polychromen Weißlichtquellen gebildet werden.

Als besonders vorteilhaft hat es sich erwiesen, wenn der Reflektor 34 ein Stück weit von der in dem Öffnungsbereich 35B freiliegenden Oberfläche des Lichtwellenleiters 31 in diesen eindringt. Dadurch kann die Ausbildung von hellen Leuchterscheinungen ("hot spots") im Lichtwellenleiter 31 im Nahbereich der Lichtquelle 35 vermieden werden. Als weiterhin günstig für die Lichteinkopplung erweist sich im übrigen die abgerundete Form der für die Bildung der Öffnungsbereiche 35B schräg gestellten Reflektorflächen. Dies gilt auch für die Ausführungsform nach Fig.3.

Auch bei dieser Art von Lichtquellenelementen spielt die Lichtdämpfung praktisch keine Rolle mehr und es können Lichtquellenelemente beliebiger Form und Länge geformt werden.

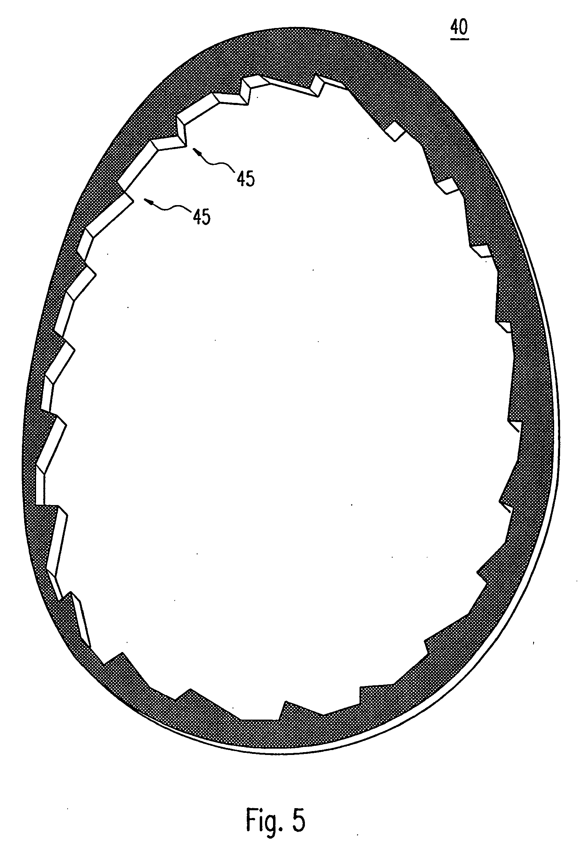

In Fig.5 ist ein spezielles Ausführungsbeispiel des in Fig.4 gezeigten Lichtquellenelements dargestellt. Dieses weist eine geschlossene Form auf, wobei an seiner inneren Umfangsfläche eine Mehrzahl von hintereinander angeordneten Lichteinkopplungseinheiten 45 vorgesehen sind (die Lichtquellen sind nicht dargestellt). Die Struktur und der Aufbau des Lichtwellenleiters 40 sind wie in Fig.4 dargestellt. Die spezielle Form des geschlossenen Rings kann beliebig gewählt werden.

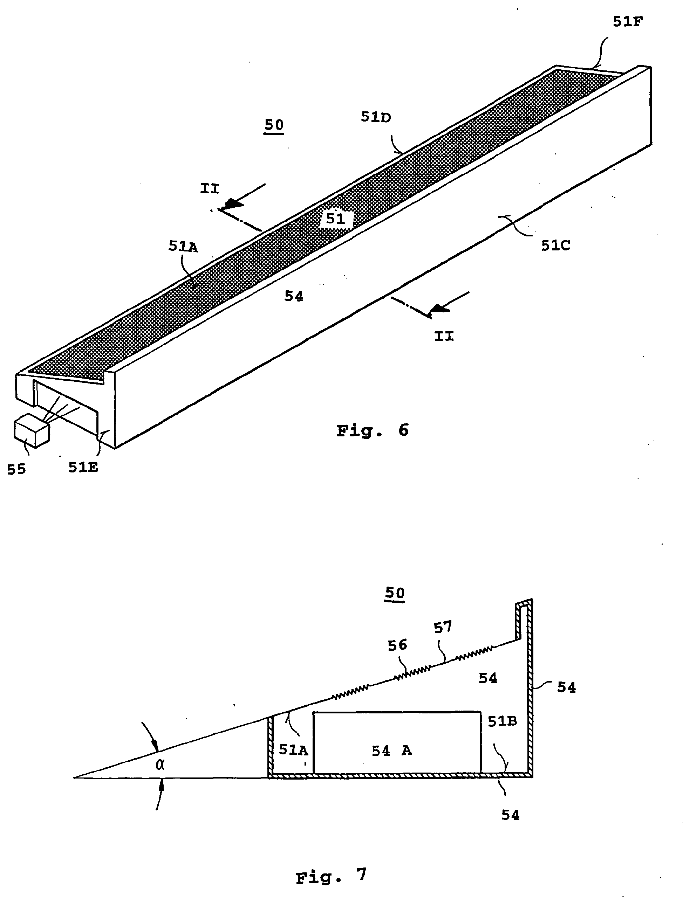

In der Fig.6 ist ein Ausführungsbeispiel für ein erfindungsgemäß hergestelltes Lichtquellenelements 50 dargestellt, wie es beispielsweise zur Hinterleuchtung eines Flüssigkristall-Displays in dem Armaturenbrett eines Kraftfahrzeug verwendet werden kann. In Fig.7 ist das Lichtquellenelement in einem Querschnitt entlang der Linie II-II in der Fig.6 dargestellt.

Das Kernstück des Lichtquellenelements 50 der Fig.6 ist ein flächiger Lichtwellenleiter 51, der im Prinzip aus jedem transparenten Material, z.B. aus einem thermoplastischen Harz wie Acrylharz, Polycarbonatharz, oder auch aus Plexiglas oder PMMA (Polymethylmethacrylat) geformt werden kann. Das in diesen Lichtwellenleiter 51 von einer Lichtquelle 55 wie einer Halbleiter-Lichtemissionsdiode eingekoppelte Licht wird homogen über die Lichtaustrittsfläche 51A verteilt und einem in einem geringen Abstand oberhalb der Lichtaustrittsfläche 51A mittels Abstandshaltern montierten (nicht dargestellten) flächigen Flüssigkristallelement zugeführt. Zu diesem Zweck ist der Lichtwellenleiter 51 allseitig von Reflektoren 54 umgeben, durch welche die auftreffende Lichtstrahlung diffus zurückgeworfen wird.

In dem Ausführungsbeispiel der Fig.6 sind in vorteilhafter Weise auch die Stirnflächen zum Teil mit Reflektoren 54 bedeckt. In diese sind Öffnungen 54A für den Durchtritt der von den Lichtquellen 55 emittierten Lichtstrahlung geformt. Es kann aber auch ebenso vorgesehen sein, daß die Stirnflächen von vornherein nicht von Reflektoren 54 bedeckt sind.

Der Lichtwellenleiter 51 weist eine derartige Form auf, daß die Ebene der Lichtaustrittsfläche 51A mit der Ebene der ihr gegenüberliegenden Oberfläche 51B einen Winkel α bildet.
Wenn daher das Lichtleitermodul in der dargestellten Form an einer ebenen Rückwand, beispielsweise in dem Armaturenbrett eines Kraftfahrzeugs montiert wird, ist die Lichtaustrittsfläche 51A und somit auch das vor der Lichtaustrittsfläche 51A montierte Flüssigkristallelement schräggestellt und einem Betrachter zugewandt. Somit wird erreicht, daß der Betrachter bei einem an einer unteren Position eines Armaturenbretts angebrachten Flüssigkristall-Display annähernd senkrecht auf die Anzeigefläche blickt, so daß die bei den konventionellen Lichtleitermodulen auftretenden Sichtmängel vermieden werden.

Die Reflektoren 54 sind in Form eines Folienmaterials aufgebracht. Dieses kann z.B. eine Folie auf der Basis von Polycarbonat sein, die mit weißer Farbe beschichtet oder bedruckt ist. Um das Herstellungsverfahren noch weiter zu vereinfachen, könnte die Folie auch bereits während der Spritzgußformung des Lichtwellenleiters 50 aufgebracht werden, indem vor dem Spritzguß die Form der Spritzgußapparatur mit der Folie ausgelegt wird. Nach Aushärtung der Kunststoffmasse haftet die Folie an dem Wellenleiter an und kann zusammen mit diesem aus der Spritzgußapparatur entnommen werden.

Die Homogenisierung der Leuchtdichte wird im Prinzip ebenso wie bei der EP-A-0 500 960 mit einem veränderlichen Flächenverhältnis aus lichtstreuenden und ebenen Flächen herbeigeführt, die auf der Lichtaustrittsfläche 51A und/oder der dieser gegenüberliegenden Oberfläche 51B des Lichtwellenleiters 51 oder auf beiden geformt sind.

In der Figur 7 sind lediglich beispielhaft in die Lichtaustrittsfläche 51A des Lichtwellenleiters 51 geformte lichtstreuende Flächen 56 und ebene Flächen 57 angedeutet. Das Flächenverhältnis der ebenen Flächen 57 zu den lichtstreuenden Flächen 56 hängt von der Leuchtdichte an dem jeweiligen Ort in dem Lichtwellenleiter 51 ab. In Gebieten relativ hoher Leuchtdichte im Lichtwellenleiter 51 wird ein relativ hohes Flächenverhältnis eingestellt, während dieser Anteil in Gebieten relativ niedriger Leuchtdichte niedrig eingestellt wird. Für die Form der lichtstreuenden Flächen 56 gibt es mehrere Möglichkeiten. Eine besonders einfache Herstellungsweise ist das Erzeugen aufgerauhter Bereiche durch Abschmirgeln der jeweiligen Oberfläche. An den Stellen, an denen eine geringe Leuchtdichte vorhanden ist, wird die Fläche vergleichsweise intensiv geschmirgelt, um das auftreffende Licht zur Streuung zu bringen. Die lichtstreuenden Bereiche 56 können aber auch z.B. kleine Erhebungen sein, die in gezielter Weise als Punktmatrix auf die Oberfläche aufgebracht werden. Die Dichteverteilung in der Punktmatrix kann beispielsweise durch ein Simulationsprogramm ermittelt werden, in welches im wesentlichen die Dimensionen des Lichtwellenleiters 51 und die Orte und Intensitäten der Lichteinkopplung sowie die Reflexionsverhältnisse eingegeben werden.

Es kann auch vorgesehen sein, daß an beiden Stirnflächen Lichtquellen angeordnet sind, von denen Licht in den Lichtwellenleiter 51 eingekoppelt wird.

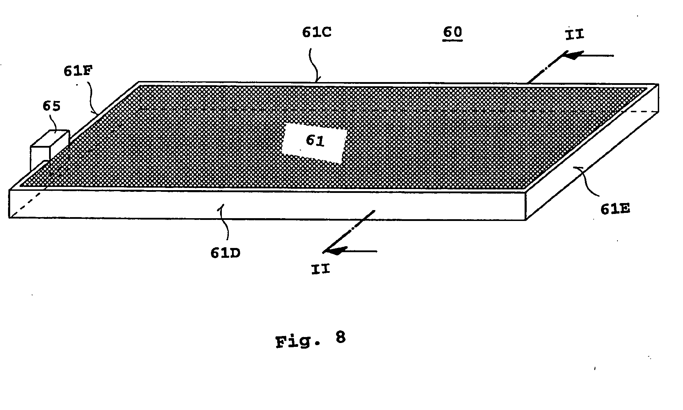

In der Fig.8 ist eine perspektivische Ansicht einer weiteren Ausführungsform eines erfindungsgemäß hergestellten Lichtquellenelements 60 dargestellt, wie es beispielsweise zur Hinterleuchtung eines Flüssigkristall-Displays verwendet werden kann.

Das Kernstück des Lichtquellenelements 60 ist ein flächiger, quaderförmiger Lichtwellenleiter 61, der im Prinzip aus jedem transparenten Material, z.B. aus einem thermoplastischen Gießharz wie Acrylharz oder Polycarbonatharz geformt werden kann. Falls das Lichtquellenelement nach der ersten Ausführungsform der Erfindung hergestellt werden soll, muß das Material ein spritzgußfähiges Material sein.

Das in diesen Lichtwellenleiter 61 eingekoppelte Licht wird homogen über die rechteckige Fläche verteilt und einer (nicht dargestellten) Anzeigefläche eines Flüssigkristall-Displays zugeführt. An der der Lichtaustrittsfläche 61A gegenüberliegenden Oberfläche 61B sowie an den Seitenflächen 61C und 61D ist eine Folie 64 aufgebracht, durch die die auftreffende Lichtstrahlung in den Lichtwellenleiter 61 diffus zurückreflektiert wird. Die Lichteinkopplung erfolgt durch mindestens eine Lichtquelle 65, die vor mindestens einer der Stirnseitenflächen 61E oder 61F des Lichtquellenelements 60 angeordnet sind. Die Lichtquelle 65 ist beispielsweise eine Halbleiter-Lichtemissionsdiode (LED) für eine monochrome Hinterleuchtung des Flüssigkristall-Display. Besonders vorteilhaft ist die Verwendung von miniaturisierten LEDs, die in SMT-Technik (surface mounted technique) montiert werden können und beispielsweise unter den Marken SIDELED® und MiniSI-DELED® bekannt geworden sind. Durch die Verwendung einer derartigen Lichtquelle mit einem sehr flachen Lichtwellenleiter kann ein sehr flaches Lichtquellenelement (Lichtleitermodul) hergestellt werden. Als Lichtquelle kann aber im Prinzip auch eine Weißlichtquelle wie eine Halogenleuchte oder dergleichen verwendet werden.

In der weiteren Ausführungsform wird der Lichtwellenleiter 61 im Spritzguß hergestellt, wobei die Anbringung der Folie 64 gleichzeitig erfolgt. Dazu wird eine Spritzgußapparatur verwendet, welche eine Form enthält, die der gewünschten Form des Lichtwellenleiters 61 entspricht, also im Ausführungsbeispiel die Form eines flachen Quaders aufweist. Diese Form, also im wesentlichen die Bodenfläche und die Längsseitenflächen wird vor dem Spritzguß mit der Folie 64 ausgelegt. Dabei kann die Folie beispielsweise als endloser Folienstreifen durch die Spritzgußapparatur gezogen und durch Unterdruck in die Form angesaugt werden. Beim Schließen der Apparatur wird die Folie abgetrennt. Dann wird der Spritzguß mit dem Kunststoffmaterial durchgeführt. Nach dem Aushärten der Kunststoffmasse in der Gußform haftet die Folie 64 an dem Lichtwellenleiter 1 und dieser kann aus der Spritzgußapparatur entnommen werden.

Gewünschtenfalls kann die Folie 64 an allen Seitenflächen der Gußform ausgelegt werden. In jedem Fall muß dafür gesorgt werden, daß an den Stellen, an denen Lichtquellen 65 angeordnet werden sollen, entweder keine Folie vorgesehen ist oder in eine vorhandene Folie Öffnungen von ausreichender Größe in die Folie 64 geformt werden, durch die die Lichtstrahlung der Lichtquellen 65 in den Lichtwellenleiter 61 eintreten kann.

Gemäß eines zweiten Aspekts der vorliegenden Erfindung wird die Folie 64 in einem Tiefziehverfahren hergestellt. Vorzugsweise wird die Folie 64 mit der Bodenfläche und den Seitenflächen einstückig hergestellt. Die Folie kann dann z.B. als ein wannenförmiger Kanal vorliegen, in den der Lichtwellenleiter 61 eingeschoben werden kann.

Die Folie kann im wesentlichen aus einem Polycarbonat bestehen, welches mit weißer Farbe beschichtet oder bedruckt ist. Sie kann auch aus einem Mehrschichtenaufbau aus einer Polycarbonatschicht, einer Aluminiumschicht und der weißen Farbschicht bestehen.

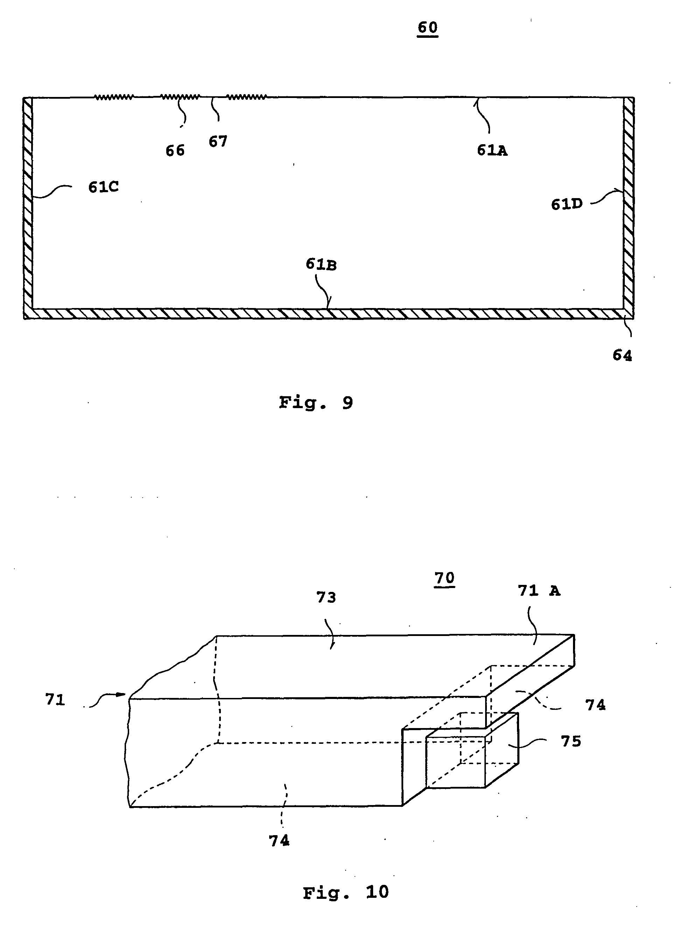

Die Homogenisierung der Leuchtdichte wird im Prinzip ebenso wie bei der EP-A-0 500 960 mit einem veränderlichen Flächenverhältnis aus lichtstreuenden und ebenen Flächen herbeigeführt, die auf der Lichtaustrittsfläche 61A und/oder der dieser gegenüberliegenden Oberfläche 61B des Lichtwellenleiters 61 oder auf beiden geformt sind. In der Figur 9 sind lediglich beispielhaft in die Lichtaustrittsfläche 61A des Lichtwellenleiters 61 geformte lichtstreuende Flächen 66 und ebene Flächen 67 angedeutet. Das Flächenverhältnis der ebenen Flächen 67 zu den lichtstreuenden Flächen 66 hängt von der Leuchtdichte an dem jeweiligen Ort in dem Lichtwellenleiter 61 ab. In Gebieten relativ hoher Leuchtdichte im Lichtwellenleiter 61 wird ein relativ hohes Flächenverhältnis eingestellt, während dieser Anteil in Gebieten relativ niedriger Leuchtdichte niedrig eingestellt wird. Für die Form der lichtstreuenden Flächen 66 gibt es mehrere Möglichkeiten. Eine besonders einfache Herstellungsweise ist das Erzeugen aufgerauhter Bereiche durch Abschmirgeln der jeweiligen Oberfläche. An den Stellen, an denen eine geringe Leuchtdichte vorhanden ist, wird die Fläche vergleichsweise intensiv geschmirgelt, um das auftreffende Licht zur Streuung zu bringen. Die lichtstreuenden Bereiche 66 können aber auch z.B. kleine Erhebungen sein, die in gezielter Weise als Punktmatrix auf die Oberfläche aufgebracht werden. Die Dichteverteilung in der Punktmatrix kann beispielsweise durch ein Simulationsprogramm ermittelt werden, in welches im wesentlichen die Dimensionen des Lichtwellenleiters 61 und die Orte und Intensitäten der Lichteinkopplung sowie die Reflexionsverhältnisse eingegeben werden.

Zur Herstellung eines Flüssigkristall-Displays wird ein Flüssigkristallelement oberhalb der Lichtaustrittsfläche 61A mittels Abstandshaltern an das Lichtquellenelement befestigt.

In der Fig.10 ist eine Teilansicht eines anderen Ausführungsbeispiels eines erfindungsgemäßen Lichtquellenelements 70 perspektivisch dargestellt.

Dieses enthält einen Lichtwellenleiter 71, der an einem Ende einen über die Stirnseitenfläche vorkragenden, mit der Lichtaustrittsfläche 73 fluchtenden Vorsprung 71A aufweist. Unterhalb des Vorsprungs 71A ist eine Lichtquelle 75 angeordnet, so daß durch den Vorsprung 71A der Raum oberhalb der Lichtquelle 75 zusätzlich genutzt wird. Somit wird die Fläche des Lichtquellenelements 70 und somit die nutzbare Anzeigefläche des Flüssigkristall-Display vergrößert. Zusätzlich zu der Bodenfläche und den Seitenflächen wird die der Lichtquelle 75 zugewandte Fläche des Vorsprungs 71A ebenfalls mit der Folie 74 bedeckt. Dadurch können unerwünschte Lichterscheinungen wie z.B. sogenannte "hot spots", wie sie häufig in dem Bereich des Lichtwellenleiters unmittelbar oberhalb der Lichtquelle auftreten, vermieden werden.

Zur Herstellung eines Lichtquellenelements 70 wie in Fig.10 muß für die weitere Ausführungsform die Gußform der Spritzgußapparatur eine entsprechende komplementäre Form aufweisen.

Für die andere Ausführungsform muß ein entsprechendes Tiefziehverfahren zur Herstellung der Folie 74 angewandt werden.

## Patentansprüche

1. Lichtquellenelement (10;30) mit einem Lichtwellenleiter (1;31), bei dem
- eine Lichtaustrittsfläche (1A;31A) und mindestens eine Lichteintrittsfläche (5B;35B) vorgesehen ist,
- die der Lichtaustrittsfläche (1A;31A) gegenüberliegende Oberfläche (1B;51B) und mindestens ein Teil der die Lichtaustrittsfläche (1A;31A) und die gegenüberliegende Oberfläche verbindenden Seitenflächen (1C,1D) mit Licht reflektierenden oder diffus zurückwerfenden Reflektoren (4;34) bedeckt sind, und
- die Lichteintrittsfläche (5B;35B) in einem spitzen Winkel zu einer der Haupterstreckungsrichtungen des Lichtwellenleiters angeordnet ist,
**dadurch gekennzeichnet, daß**
- zumindest einer der die Seitenflächen bedeckenden Reflektoren einen Öffnungsbereich aufweist, und
- die Lichteintrittsfläche (5B;35B) von diesem nicht mit einem Reflektor versehenen Teil der entsprechenden Seitenfläche (1C,1D) gebildet ist.

2. Lichtquellenelement nach Anspruch 1,
**dadurch gekennzeichnet, daß**
- an dem Lichtwellenleiter vor dem Öffnungsbereich (5B) eine Lichtquelle (5A,35A) derart angeordnet ist, daß
- die im Betrieb von der Lichtquelle (5A) emittierte Lichtstrahlung mit einem schiefen Winkel in den Lichtwellenleiter (1,31) eindringt.

3. Lichtquellenelement nach Anspruch 2,
**dadurch gekennzeichnet, daß**
- in mindestens einer Längsseitenfläche (1C,1D) oder der Oberfläche (1B) des Lichtwellenleiters (1,31) mindestens ein dreieckförmiger Vorsprung geformt ist,
- dessen eine Seitenfläche von einem Reflektor (4,34) bedeckt ist und
- dessen andere Seitenfläche nach außen freiliegt und somit den Öffnungsbereich (5B,35B) bildet.

4. Lichtquellenelement nach Anspruch 1,
**dadurch gekennzeichnet, daß**
- der Lichtwellenleiter (51) eine derartige Form aufweist, daß die Lichtaustrittsfläche (51A) und die ihr gegenüberliegende Oberfläche (51B) des Lichtwellenleiters (51) einen von Null verschiedenen Winkel (α) bilden.

5. Lichtquellenelement nach Anspruch 2 oder 4,
**dadurch gekennzeichnet, daß**
- die Lichtaustrittsfläche (1A;31A) und/oder die ihr gegenüberliegende Oberfläche des Lichtwellenleiters lichtstreuende Abschnitte (6;56;66) und ebene Abschnitte (7;57;67) aufweist,
- und das Flächenverhältnis der ebenen Abschnitte (7;57;67) zu den lichtstreuenden Abschnitten (6;56;66) entlang dem Lichtwellenleiter so eingestellt wird, daß eine gleichmäßige Leuchtdichte des Lichtquellenelements erzielt wird.

6. Lichtquellenelement nach einem der vorhergehenden Ansprüche,
**dadurch gekennzeichnet, daß**
- die Reflektoren (4;34) einstückig miteinander verbunden sind.

7. Lichtquellenelement nach einem der vorhergehenden Ansprüche,
**dadurch gekennzeichnet, daß**
- das Material der Reflektoren (4,34) spritzgußfähig ist und die Reflektoren (4,34) im Spritzguß hergestellt sind.

8. Lichtquellenelement nach einem der Ansprüche 1 bis 6,
**dadurch gekennzeichnet, daß**
- das Material der Reflektoren (4) aus einem thermoplastischen Polyester, insbesondere auf der Basis von Polybutylenterephtalar geformt ist.

9. Lichtquellenelement nach einem der Ansprüche 1 bis 6,
**dadurch gekennzeichnet, daß**
- das Material der Reflektoren (4,34) Pocan® ist.

10. Lichtquellenelement nach einem der Ansprüche 1 bis 5,
**dadurch gekennzeichnet, daß**
- die Reflektoren aus einer reflektierenden oder diffus rückstreuenden Folie (64,74) geformt sind.

11. Lichtquellenelement nach Anspruch 10,
**dadurch gekennzeichnet, daß**
- die Folie auf der Basis von Polycarbonat geformt ist.

12. Lichtquellenelement nach Anspruch 10 oder 11,
**dadurch gekennzeichnet, daß**
- gegebenenfalls eine oder mehrere Öffnungen in die Folie (64, 74) für den Durchtritt der Lichtstrahlung geformt sind.

13. Lichtquellenelement nach einem der vorhergehenden Ansprüche,
**dadurch gekennzeichnet, daß**
- der Lichtwellenleiter (71) einen über eine Seitenfläche vorkragenden, mit der Lichtaustrittsfläche (73) fluchtenden Vorsprung (71A) aufweist,
- unter welchem die mindestens eine Lichtquelle (75) angeordnet ist.

14. Lichtquellenelement nach Anspruch 13,
**dadurch gekennzeichnet, daß**
- die der Lichtquelle (75) zugewandte Fläche des Vorsprungs (71A) ebenfalls mit der Folie (74) bedeckt ist.

15. Lichtquellenelement nach einem der Ansprüche 10 bis 14,
**dadurch gekennzeichnet, daß**
- die Folie mit weißer Farbe beschichtet oder bedruckt ist.

16. Lichtquellenelement nach einem der vorhergehenden Ansprüche,
**dadurch gekennzeichnet, daß**
- es einen geschlossenen Ring bildet.

17. Lichtquellenelement nach einem oder mehreren der vorhergehenden Ansprüche,
**dadurch gekennzeichnet, daß**
- die mindestens eine Lichtquelle eine Halbleiter-Lichtemissionsdiode ist.

18. Flüssigkristall-Display mit einem Lichtquellenelement nach einem oder mehreren der vorhergehenden Ansprüche,
**dadurch gekennzeichnet, daß**
- auf der Seite der Lichtaustrittsfläche ein Flüssigkristallelement angeordnet ist.

19. Flüssigkristall-Display nach Anspruch 18,
**dadurch gekennzeichnet, daß**
- das Flüssigkristallelement durch Abstandshalter von der Lichtaustrittsfläche beabstandet gehaltert ist.

20. Verfahren zur Herstellung eines Lichtquellenelements,
**gekennzeichnet durch**
die Verfahrensschritte
- Herstellen eines Lichtwellenleiters im Spritzgußverfahren, wobei
- eine dafür vorgesehene Form einer Spritzgußapparatur auf ihrer Bodenfläche und mindestens einem Teil der Seitenflächen mit einer Licht reflektierenden oder diffus rückstreuenden Folie ausgelegt wird,
- ein transparenter Kunststoff in den Hohlraum eingespritzt wird, und
- der Lichtwellenleiter nach dem Aushärten entnommen wird,
- Anordnen mindestens einer Lichtquelle an mindestens einer Seitenfläche des Lichtwellenleiters.

21. Verfahren nach Anspruch 20,
**dadurch gekennzeichnet, daß**
- die Folie in der Form der Spritzgußapparatur an allen Seitenflächen ausgelegt wird und
- vor dem Anordnen der mindestens einen Lichtquelle entsprechende Öffnungen in die Folie für den Durchtritt der Lichtstrahlung geschaffen werden.

22. Verfahren zur Herstellung eines Lichtquellenelements,
**gekennzeichnet durch**
die Verfahrensschritte
- Herstellen eines Lichtwellenleiters,
- Herstellen einer Licht reflektierenden oder diffus rückstreuenden Folie, die eine Bodenfläche und mindestens eine Seitenfläche umfaßt, **durch** ein Tiefziehverfahren,
- Anbringen der Folie an dem Lichtwellenleiter,
- Anordnen mindestens einer Lichtquelle an mindestens einer Seitenfläche des Lichtwellenleiters.

23. Verfahren nach Anspruch 22,
**dadurch gekennzeichnet, daß**
- vor dem Anordnen der mindestens einen Lichtquelle entsprechende Öffnungen in die Folie für den Durchtritt der Lichtstrahlung geschaffen werden.

24. Verfahren nach einem der Ansprüche 20 bis 23,
**dadurch gekennzeichnet, daß**
- die Folie mit weißer Farbe beschichtet oder bedruckt ist.

25. Verfahren nach einem der Ansprüche 20 bis 24,
**dadurch gekennzeichnet, daß**
- die Folie Polycarbonat enthält.

## Claims

1. Light source element (10; 30) having an optical waveguide (1; 31), in which
- a light exit area (1A; 31A) and at least one light entrance area (5B; 35B) are provided,
- the surface (1B; 51B) opposite the light exit area (1A; 31A) and at least one portion of the side areas (1C, 1D) linking the light exit area (1A; 31A) and the opposite surface are covered with light reflecting or diffusely retroreflecting reflectors (4; 34), and
- the light entrance area (53; 35B) is arranged at an acute angle with respect to one of the main directions of extent of the optical waveguide,
**characterized in that**
- at least one of the reflectors covering the side areas has an opening region, and
- the light entrance area (5B; 35B) is formed by this portion of the corresponding side area (1C, 1D) which is not provided with a reflector.

2. Light source element according to Claim 1,
**characterized in that**
- a light source (5A, 35A) is arranged at the optical waveguide in front of the opening region (5B) in such a way that
- the light radiation emitted by the light source (5A) during operation penetrates into the optical waveguide (1, 31) at an oblique angle.

3. Light source element according to Claim 2,
**characterized in that**
- at least one triangular projection is formed in at least one longitudinal side area (1C, 1D) or the surface (1B) of the optical waveguide (1, 31),
- one side area of said projection being covered by a reflector (4, 34) and
- the other side area of said projection being outwardly uncovered and thus forming the opening region (5B, 35B).

4. Light source element according to Claim 1,
**characterized in that**
- the optical waveguide (51) has a form such that the light exit area (51A) and the surface (51B) opposite it of the optical waveguide (51) form an angle (α) that is different from zero.

5. Light source element according to Claim 2 or 4,
**characterized in that**
- the light exit area (1A; 31A) and/or the surface opposite it of the optical waveguide have/has light-scattering sections (6; 56; 66) and planar sections (7; 57; 67),
- and the area ratio of the planar sections (7; 57; 67) to the light-scattering sections (6; 56; 66) along the optical waveguide is set in such a way as to obtain a uniform luminance of the light source element.

6. Light source element according to one of the preceding claims,
**characterized in that**
- the reflectors (4; 34) are connected to one another in one piece.

7. Light source element according to one of the preceding claims,
**characterized in that**
- the material of the reflectors (4, 34) is injection-mouldable and the reflectors (4, 34) are produced by injection moulding.

8. Light source element according to one of Claims 1 to 6,
**characterized in that**
- the material of the reflectors (4) is formed from a thermoplastic polyester, in particular on the basis of polybuteneterephthalate.

9. Light source element according to one of Claims 1 to 6,
**characterized in that**
- the material of the reflectors (4, 34) is Pocan®.

10. Light source element according to one of Claims 1 to 5,
**characterized in that**
- the reflectors are formed from a reflecting or diffusely backscattering film (64, 74).

11. Light source element according to Claim 10,
**characterized in that**
- the film is formed on the basis of polycarbonate.

12. Light source element according to Claim 10 or 11,
**characterized in that**
- if appropriate one or a plurality of openings into the film (64, 74) are formed for the passage of the light radiation.

13. Light source element according to one of the preceding claims,
**characterized in that**
- the optical waveguide (71) has a projection (71A) that protrudes over a side area and is flush with the light exit area (73),
- the at least one light source (75) being arranged under said projection.

14. Light source element according to Claim 13,
**characterized in that**
- that area of the projection (71A) which faces the light source (75) is likewise covered with the film (74).

15. Light source element according to one of Claims 10 to 14,
**characterized in that**
- the film is coated or printed with white colour.

16. Light source element according to one of the preceding claims,
**characterized in that**
- it forms a closed ring.

17. Light source element according to one or more of the preceding claims,
**characterized in that**
- the at least one light source is a semiconductor light emitting diode.

18. Liquid crystal display having a light source element according to one or more of the preceding claims,
**characterized in that**
- a liquid crystal element is arranged on the side of the light exit area.

19. Liquid crystal display according to Claim 18,
**characterized in that**
- the liquid crystal element is mounted in a manner spaced apart from the light exit area by spacers.

20. Method for producing a light source element
**characterized by**
the method steps of
- producing an optical waveguide by the injection moulding method,
- a mould of an injection-moulding apparatus provided for this being lined with a light reflecting or diffusely backscattering film on its bottom area and at least one portion of the side areas,
- a transparent plastic is injected into the cavity, and
- the optical waveguide is removed after curing,
- arranging at least one light source at at least one side area of the optical waveguide.

21. Method according to Claim 20,
**characterized in that**
- the film is lined at all side areas in the mould of the injection-moulding apparatus, and
- prior to arranging the at least one light source, corresponding openings into the film are made for the passage of the light radiation.

22. Method for producing a light source element,
**characterized by** the method steps of
- producing an optical waveguide,
- producing a light reflecting or diffusely backscattering film, which comprises a bottom area and at least one side area, by means of a deep-draw method,
- fitting the film at the optical waveguide,
- arranging at least one light source at at least one side area of the optical waveguide.

23. Method according to Claim 22,
**characterized in that**
- prior to arranging the at least one light source, corresponding openings into the film are made for the passage of the light radiation.

24. Method according to one of Claims 20 to 23,
**characterized in that**
- the film is coated or printed with white colour.

25. Method according to one of Claims 20 to 24,
**characterized in that**
- the film contains polycarbonate.

## Revendications

1. Élément source de lumière (10 ; 30) comprenant une fibre optique (1 ; 31), avec laquelle
- il est prévu une surface de sortie de la lumière (1A ; 31A) et au moins une surface d'entrée de la lumière (5B ; 35B),
- la surface (1B ; 51B) à l'opposé de la surface de sortie de la lumière (1A ; 31A) et au moins une partie des surfaces latérales (1C, 1D) qui relient la surface de sortie de la lumière (1A ; 31A) et la surface opposée étant recouvertes de réflecteurs (4, 34) réfléchissant la lumière ou la renvoyant de manière diffuse et
- la surface d'entrée de la lumière (5B ; 35B) étant disposée selon un angle aigu par rapport à l'une des directions d'extension principale de la fibre optique,
**caractérisé en ce que**
- au moins l'un des réflecteurs recouvrant les surfaces latérales présente une zone d'ouverture et
- la surface d'entrée de la lumière (5B ; 35B) est formée par cette partie non munie d'un réflecteur de la surface latérale (1C, 1D) correspondante.

2. Élément source de lumière selon la revendication 1, **caractérisé en ce que**
- une source de lumière (5A, 35A) est disposée sur la fibre optique avant la zone d'ouverture (5B) de telle sorte que
- le rayonnement lumineux émis lors du fonctionnement de la source de lumière (5A) pénètre dans la fibre optique (1, 31) avec un angle oblique.

3. Élément source de lumière selon la revendication 2, **caractérisé en ce que**
- au moins une saillie triangulaire est façonnée dans au moins une surface latérale longitudinale (1C, 1D) ou la surface (1B) de la fibre optique (1, 31),
- dont une surface latérale est recouverte par un réflecteur (4, 34) et
- dont l'autre surface latérale est dégagée vers l'extérieur et forme ainsi la zone d'ouverture (5B, 35B).

4. Élément source de lumière selon la revendication 1, **caractérisé en ce que** la fibre optique (51) présente une forme telle que la surface de sortie de la lumière (51A) et la surface (51B) de la fibre optique (51) qui lui est opposée forment un angle (α) différent de zéro.

5. Élément source de lumière selon la revendication 2 ou 4, **caractérisé en ce que**
- la surface de sortie de la lumière (1A ; 31A) et/ou la surface de la fibre optique qui lui est opposée présentent des sections diffusantes (6 ; 56 ; 66) et des sections planes (7 ; 57 ; 67),
- et le rapport de surface entre les sections planes (7 ; 57 ; 67) et les sections diffusantes (6 ; 56 ; 66) le long de la fibre optique est réglé de manière à obtenir une densité lumineuse régulière de l'élément source de lumière.

6. Élément source de lumière selon l'une des revendications précédentes, **caractérisé en ce que** les réflecteurs (4 ; 34) sont reliés entre eux d'une seule pièce.

7. Élément source de lumière selon l'une des revendications précédentes, **caractérisé en ce que** le matériau des réflecteurs (4, 34) peut être moulé par injection et les réflecteurs (4, 34) sont fabriqués par moulage par injection.

8. Élément source de lumière selon l'une des revendications 1 à 6, **caractérisé en ce que** le matériau des réflecteurs (4) est constitué d'un polyester thermoplastique, notamment à base de polybutènetéréphtalate.

9. Élément source de lumière selon l'une des revendications 1 à 6, **caractérisé en ce que** le matériau des réflecteurs (4, 34) est du Pocan®.

10. Élément source de lumière selon l'une des revendications 1 à 5, **caractérisé en ce que** les réflecteurs sont façonnés à partir d'un film (64, 74) réfléchissant ou renvoyant la lumière de manière diffuse.

11. Élément source de lumière selon la revendication 10, **caractérisé en ce que** le film est façonné à base de polycarbonate.

12. Élément source de lumière selon la revendication 10 ou 11, **caractérisé en ce qu'** éventuellement une ou plusieurs ouvertures sont façonnées dans le film (64, 74) pour le passage du rayonnement lumineux.

13. Élément source de lumière selon l'une des revendications précédentes, **caractérisé en ce que**
- la fibre optique (71) présente une partie en saillie (71A) dans l'alignement de la surface de sortie de la lumière (73) qui dépasse au-dessus d'une surface latérale,
- sous laquelle est disposée l'au moins une source de lumière (75).

14. Élément source de lumière selon la revendication 13, **caractérisé en ce que** la surface de la partie en saillie (71A) faisant face à la source de lumière (75) est également recouverte du film (74).

15. Élément source de lumière selon l'une des revendications 10 à 14, **caractérisé en ce que** le film est revêtu ou imprimé avec de la couleur blanche.

16. Élément source de lumière selon l'une des revendications précédentes, **caractérisé en ce qu'**il forme un anneau fermé.

17. Élément source de lumière selon l'une ou plusieurs des revendications précédentes, **caractérisé en ce que** l'au moins une source de lumière est une diode électroluminescente en semiconducteur.

18. Afficheur à cristaux liquides comprenant un élément source de lumière selon l'une ou plusieurs des revendications précédentes, **caractérisé en ce qu'**un élément à cristaux liquides est disposé sur le côté de la surface de sortie de la lumière.

19. Afficheur à cristaux liquides selon la revendication 18, **caractérisé en ce que** l'élément à cristaux liquides est maintenu à une certaine distance de la surface de sortie de la lumière par des entretoises.

20. Procédé de fabrication d'un élément source de lumière, **caractérisé par** les étapes
- Fabrication d'une fibre optique par procédé de moulage par injection,
- un moule prévu à cet effet d'un appareil de moulage par injection étant conçu avec un film réfléchissant la lumière ou la renvoyant de manière diffuse sur la surface de son fond et au moins une partie des surfaces latérales,
- une matière plastique transparente étant injectée dans l'espace creux et
- la fibre optique étant retirée après le durcissement,
- Disposition d'au moins une source de lumière sur au moins une surface latérale de la fibre optique.

21. Procédé selon la revendication 20, **caractérisé en ce que**
- le film est dimensionné sur toutes les surfaces latérales dans le moule de l'appareil de moulage par injection et
- des ouvertures correspondantes sont aménagées dans le film pour le passage du rayonnement lumineux avant la pose de l'au moins une source de lumière.

22. Procédé de fabrication d'un élément source de lumière, **caractérisé par** les étapes
- Fabrication d'une fibre optique,
- Fabrication d'un film réfléchissant la lumière ou la renvoyant de manière diffuse, lequel présente une surface de fond et au moins une surface latérale, par un procédé d'emboutissage,
- Application du film sur la fibre optique,
- Disposition d'au moins une source de lumière sur au moins une surface latérale de la fibre optique.

23. Procédé selon la revendication 22, **caractérisé en ce que** des ouvertures correspondantes sont aménagées dans le film pour le passage du rayonnement lumineux avant la pose de l'au moins une source de lumière.

24. Procédé selon l'une des revendications 20 à 23, **caractérisé en ce que** le film est revêtu ou imprimé avec de la couleur blanche.

25. Procédé selon l'une des revendications 20 à 24, **caractérisé en ce que** le film contient du polycarbonate.
